# EUROPEAN PATENT SPECIFICATION

(11) **EP 0 355 122 B1**
(45) Date of publication and mention of the grant of the patent: **13.07.1994**
(21) Application number: 88904307.1
(22) Date of filing: 15.04.1988
(51) Int. Cl.: C08F 283/08, C08L 51/08, C08L 71/12

(54) **COMPOSITIONS OF POLYPHENYLENE OXIDES AND THERMOPLASTIC POLYMERS**
ZUSAMMENSETZUNGEN AUF DER BASIS VON POLYPHENYLOXIDEN UND THERMOPLASTISCHEN POLYMEREN
COMPOSITION D'OXYDES DE POLYPHENYLENE ET POLYMERES THERMOPLASTIQUES

(30) Priority: 24.04.1987 US 42192; 11.04.1988 US 174521
(43) Date of publication of application: 28.02.1990
(73) Proprietor: AlliedSignal Inc., Morristown, New Jersey 07962-2245 (US)
(72) Inventor: AKKAPEDDI, Murali, Krishna, Morris Plains, NJ 07950 (US); VAN BUSKIRK, Bruce, Randolph, NJ 07869 (US); BROWN, Alan, Curtis, Somerset, NJ 08873 (US)
(74) Representative: Brock, Peter William
(86) International application number: US8801246
(87) International publication number: WO8808433

(56) References cited:
- EP-A- 223 116
- EP-A- 226 002
- EP-A- 226 055
- EP-A- 226 910
- EP-A- 319 339
- EP-A- 0 223 115
- EP-A- 0 225 170
- DE-A- 3 117 514
- US-A- 4 654 405
- Patent Abstracts of Japan, volume 8, no. 168 (C-236)(1605), 3 August 1984, & JP, A, 5966452 (UNITIKA K.K.) 14 April 1984

## Description

This invention relates to compositions of functionalized polyphenylene oxides, amine-terminated polyamide, and functionalized ethylene/α-olefin polymers.

Compositions of polyphenylene oxide and thermoplastic plastic polymers are known. In particular, polyphenylene oxide and polyamides compositions have been made as indicated in US-A-3379792 and -4338421. Such compositions are brittle unless other additives are incorporated into the compositions.

Patents such as US-A-4315086 and EP-A-0129825 disclose compositions of polyphenylene oxide, also known as polyphenylene ether, and polyamides. These disclosures indicate that it is known to include an additional additive to enhance the properties of the composition. It is conjectured that such an additive provides a reactive linkage between the polyphenylene oxide and the polyamide. This linkage has been presumed to be a graft linkage.

It is known that the impact resistance of thermoplastic polymers such as polyamide, and polyesters such as polyethylene terephthalate can be improved by blending with elastomeric polymers. It is also known to add elastomeric or rubbery polymers to blends of polyphenylene oxide and polyamides where such compositions contain grafting agents. This is disclosed in US-A-4315086
International Application WO 87/00540 teaches a blend of functionalized polyphenylene oxides, polyamides, and impact modifiers such as polystyrene-polybutadiene-polystyrene.

DE-A-3117514 discloses that polyphenylene oxides (PPO) react with a variety of unsaturated materials to give products having terminal unsaturation that can be mixed with a variety of polymeric materials.

US-A-4654405 discloses that PPO can be reacted with ethylenically unsaturated carboxylic compounds to form carboxylated PPO resins that form alloys with more polar resins, such as polyamides. These alloys can also contain impact modifiers.

EP-A-0223115, -0223116 and -0226002 disclose that polymers of vinyl aromatic compounds can be mixed with PPO that has been modified by graft polymerization with, respectively, an unsaturated lactam, fumaric acid, or an unsaturated amide.

EP-A-0225170 discloses mouldable compositions comprising:
(1) a mixture of PPO and polyamide,
(2) an aromatic vinyl/conjugated diene block polymer, and
(3) an unsaturated polar compound (e.g. acid or anhydride) having an affinity to amido linkages.

EP-A-0226055 and -0226910 disclose that PPO, modified by unsaturated carboxyl compounds, can be compounded with such polar resins as polyamides.

EP-A-0319339, which is believed to be of significance only in respect of Article 54(3) EPC, discloses that the low temperature impact resistance of a PPO/polyamide/rubber composition can be improved by using two kinds of rubber, e.g. a block polymer (e.g. styrene/butadiene/styrene) and an olefin polymer modified by carboxylic compounds. The PPO is itself modified by reaction with an olefin having a carboxylic acid, anhydride or imide group.

It would be desirable to have functionalized polyphenylene oxides; and compositions of functionalized polyphenylene oxides and thermoplastic polymers.

The present invention provides a composition comprising (A), (B) and (C):
(A) at least 5% by weight, based on total composition of a reaction product of
   (1) 70 to 99.99 percent by weight of polyphenylene oxide; and
   (2) 0.01 to 30 percent by weight of a substituted olefin having the formula: 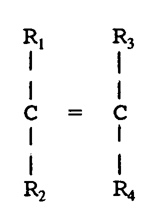 wherein one to two of R₁, R₂, R₃ and R₄ individually are selected from a reactive group consisting of a carboxylic acid, acid anhydride, acid amide, imido, carboxylic ester, amino group, hydroxyl group, epoxy group, oxazoline, oxazolone, oxazine, oxazinone, isocyanate, carbamate, carbamoyl lactam, acyl lactam, and mixtures and derivatives thereof, and wherein the remaining two to three of R₁, R₂, R₃ and R₄ individually are H or a hydrocarbon radical from 1 to 20 carbon atoms;
(B) at least 5% by weight, based on total composition of amine-terminated polyamide; and
(C) 5 to 50% by weight, based on total composition, of a functionalized rubber of ethylene and a C₃-C₈ α-olefin.

Preferably, component (C) is a functionalized rubber of ethylene and propylene, most preferably maleated ethylene propylene rubber.

The substituted olefin can be substituted with an oxazoline or oxazine radical having the formula: 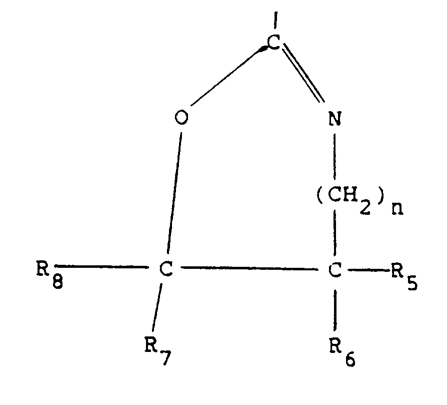
wherein R₅ - R₈ individually are selected from H, and hydrocarbon groups such as alkyl groups having from 1 to 20 and preferably 1 to 5 carbon atoms, and aryl groups having from 6 to 14 carbon atoms. The alkyl and aryl groups optionally contain substituents which are substantially unreactive with the olefinic double bond or the oxazoline or oxazine. n is 0 for oxazoline and 1 for oxazine. R₅ and R₆ are preferably -H or -CH₃ and most preferably -H. R₇ and R₈ are preferably -H.

The substituted olefin can be substituted with an oxazolone or oxazinone radical having the formula: 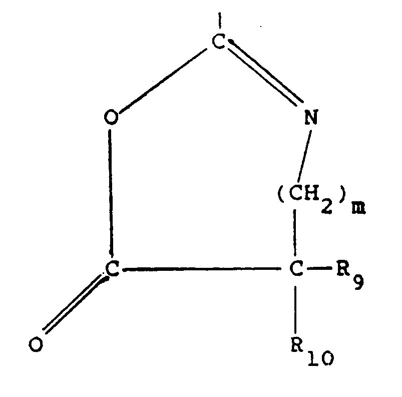
wherein R₉ and R₁₀ are individually selected from H, alkyl groups having from 1 to 20 and preferably 1 to 5 carbon atoms, and aryl groups having from 6 to 14 carbon atoms. The alkyl and aryl groups optionally contain substituents which are substantially unreactive with the olefinic double bond or the oxazolone or oxazinone. m is 0 for oxazolone and 1 for oxazinone. R₉ and R₁₀ are preferably -H or CH₃, and most preferably, -H.

The substituted olefin can be substituted with an acyl lactam of the following structure: 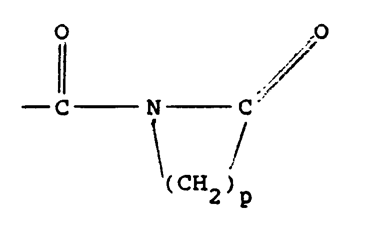
where p is from 2 to 11.

The substituted olefin can be substituted with an isocyanate (-N=C=O), or carbamate, or carbamoyl lactam derivative. The carbamate derivative has the following formula: 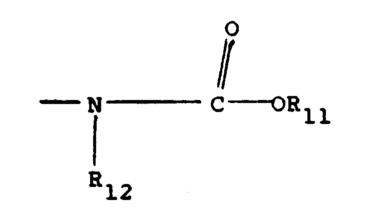
where R₁₁ and R₁₂ individually are selected from H, an alkyl radical, or an aryl radical. The carbamoyl lactam radical has the following formula: 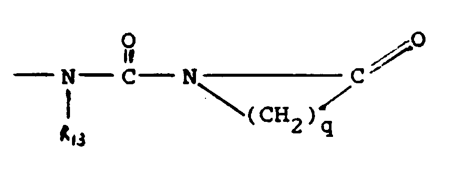
where R₁₃ is selected from H, an alkyl radical, or an aryl radical, and where q is from 2 to 11.

None of R₅₋₁₃ should contain carboxylic acid groups, anhydride groups, amide groups, sulfide groups, or other functionalities which will react with the above reactive groups.

The compositions of the present invention can be prepared by conventional polymer melt blending techniques. This method is typically conducted at a temperature above the melting temperature of the polymeric additives in a closed mixing device such as an extruder.

One component of the compositions according to the present invention is a reaction product of polyphenylene oxide and a substituted olefin. The compositions of the present invention include the reaction product of from 70 to 99.99, preferably 90 to 99.9 and more preferably 95 to 99 percent by weight of polyphenylene oxide, and correspondingly 0.01 to 30, more preferably 0.1 to 10, and most preferably 1 to 5 percent of the substituted olefin.

In a preferred embodiment, one to two of R₁, R₂, R₃ and R₄ in the substituted olefin individually are selected from a reactive group consisting of an oxazoline, oxazolone, oxazine, oxazinone, isocyanate, carbamate, carbamoyl lactam, acyl lactam, and mixtures and derivatives thereof, and the remaining two to three of R₁, R₂, R₃ and R₄ individually are H or a hydrocarbon radical of from 1 to 20 carbon atoms.

The compositions of the present invention also include 5 to 50% by weight of functionalized rubber component (C).

Preferably this is from 5 to 50, more preferably 10 to 40, and most preferably, 15 to 30 percent by weight functionalized ethylene propylene rubber, based on the total polymer weight of the composition.

The most preferred reactive groups on the substituted olefin include carboxylic acids and derivatives thereof including anhydrides. Particularly preferred are polycarboxylic acids and derivatives thereof. Specific and preferred carboxylic acids and anhydrides include maleic anhydride, maleic acid, fumaric acid, vinyl trimellitate anhydride, morpholinylmaleamic acid, cinnamic acid, bis(2-hydroxyethyl) fumaramide, n-methacrylyl laurolactam, n-methacrylyl caprolactam, p-aminostyrene, glycidyl acrylate, styrene/glycidyl methacrylate (GMA) copolymer, styrene/piperylene/GMA terpolymer, and diallylamine-iso-butyloxycarbonyl. Other preferred materials include oxazoline such as 2-isopropenyl oxazoline, 2-styryl oxazoline, and m-phenylene bisoxazoline. Particular embodiments of the reactive groups on the substituted olefin include oxazoline or oxazine having the formula: 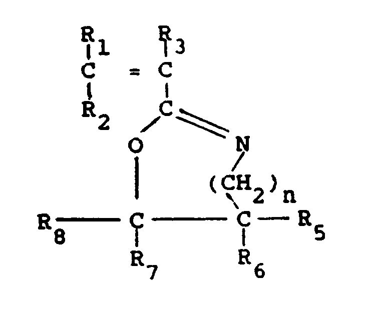
wherein R₁ - R₈ individually are selected from H, alkyl groups having from 1 to 20 and preferably 1 to 5 carbon atoms, and aryl groups having from 6 to 14 carbon atoms, the alkyl and aryl groups optionally containing substituents which are substantially unreactive with the olefinic double bond of the oxazoline or oxazine: and n is O for oxazoline and l for oxazine. R₅, R₆, and R₃ individually are preferably -H and -CH₃, and most preferably, H. R₈, R₇, R₁ and R₂ are most preferably H.

The substituted olefin can be an oxazolone or oxazinone having the formula: 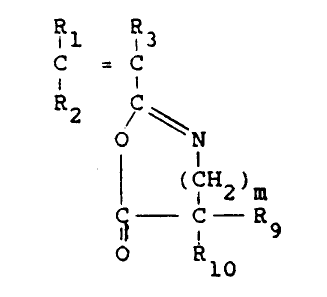
wherein R₉, R₁₀ and R₃ individually are selected from H, alkyl groups having from 1 to 20 and preferably 1 to 5 carbon atoms, aryl groups having from 6 to 14 carbon atoms, the alkyl and aryl groups optionally containing substituents which are substantially unreactive with the olefinic double bond of the oxazolone or oxazinone, the aryl halides, R₁ and R₂ are H: and m is O for oxazolone and l for oxazinone. R₉, R₁₀,
and R₃ individually are preferably -H and -CH₃, and most preferably, -H.

None of R₅-R₁₀ should contain carboxylic acid groups, anhydride groups, amide groups, sulfide groups, or other functional groups reactive with the reaction product.

The substituted olefin has a first functional group, the ethylenically unsaturated double bond, which is reactive with the polyphenylene oxide, and a second functional group, the oxazoline, oxazine, oxazolone, oxazinone, isocyanate, carbamate, carbamoyl lactam, or acyl lactam which is reactive with the amine-terminated polyamide
The reaction product of polyphenylene oxide and the substituted olefin is preferably made by melt blending polyphenylene oxide and the substituted olefin above the melt temperature of the polyphenylene oxide.

The compositions of the present invention may be produced by making the reaction product as recited above, and melt blending it with at least 5 percent by weight of the amine terminated polyamide and from 5 to 50 percent by weight of a functionalized ethylene propylene rubber. In a preferred embodiment, the functionalized ethylene propylene rubber is blended with the reaction product before addition to the amine-terminated polyamide. Alternateivly, but not as preferred, polyphenylene oxide, substituted olefin, and functionalized ethylene propylene rubber are blended prior to melt blending with the amine-terminated polyamide.

While not being bound to any particular theory, it is believed that the substituted olefin used in the present invention modifies the polyphenylene oxide by a bond through the olefinic double bond of the substituted olefin. This bond forms a graft to the polyphenylene oxide. It is believed that the reactive groups of the reaction product react with groups on the amine-terminated polyamide. Thereby the substituted olefin can form a linkage between the polyphenylene oxide and the amine-terminated polyamide. This chain is believed to be a graft formed by a reaction between the olefinic group and the polyphenylene oxide on one side and the reactive group and the amine-terminated polyamide on the other side. For example, the polyamide has amine groups on some of the polymeric chain ends, so the reactive groups could be acids or anhydrides or other groups which are reactive with the amine groups on the polyamide. The reaction grafts the polyamide to the polyphenylene oxide through the substituted olefin. Although certain substituted olefins were known in the art, the composition of the present invention is much more effective by initially forming a prereacted reaction product of the substituted olefin with the polyphenylene oxide. This is illustrated in the accompanying examples 1 and 2.

Polyphenylene oxide useful in the present invention is a well-known polymer. Polyphenylene oxides can be formed in accordance with processes described in US-A-3306875, -3360875, -3337501; and -3787361. US-A-4315086 describes a method to prepare polyphenylene oxide polymers. In this method, oxidation-polymerization of a phenol compound having the formula: 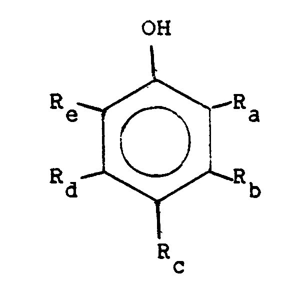
wherein Rₐ, R_{b}, R_{c}, R_{d}, and Rₑ are each a hydrogen atom, a halogen atom, hydrocarbon, or substituted hydrocarbon radical and at least one of them is a hydrogen atom, with oxygen or an oxygen-containing gas in the presence of an oxidation-coupling catalyst produces the polyphenylene oxide polymers.

Specific examples of Rₐ, R_{b}, R_{c}, R_{d}, Rₑ in the above formula include hydrogen, chlorine, fluorine, bromine, and iodine atoms, and methyl, ethyl, propyl, butyl, chloroethyl, hydroxyethyl, phenolethyl, benzol, hydroxymethyl, carboxyethyl, methoxycarbonylethyl, cyanoethyl, phenol, chlorophenol, methylphenyl, dimethyl phenol, and ethyl phenol groups.

Specific examples of phenol compounds include phenol, o-,m-or p-cresol, 2,6-, 2,5-, 2,4-, or 3,5-dimethylphenol, 2-methyl-6-phenyl phenol, 2,6-diphenylphenol, 2,6-diethylphenol, 2-methyl-6-ethylphenol, and 2,3,5-,2,3,6- or 2,4,6-trimethylphenol. These phenol compounds may be used as a mixture. Other phenol compounds which can be used include dihydric phenols (e.g., bisphenol A tetrabromobisphenol A, resorcinol, and hydroquinone).

Oxidation-coupling catalysts known in the art can be used. Typical examples of such catalysts include a cuprous salt of a tertiary amine (e.g., cuprous chloride-trimethylamine, cuprous acetate-triethylamine, cuprous chloride-pyridine), catalysts comprising cupric salt-tertiary amines and alkaline metal hydroxide (e.g., cupric chloride-pyridine-potassium hydroxide), catalysts comprising manganese salts and a primary amine (e.g., manganese chloride-ethanolamine, manganese acetate-ethylene diamine), catalysts comprising a manganese salt and an alcoholate or phenolate (e.g., manganese chloride-sodium methylate, manganese chloride-sodium phenolate) and catalysts comprising a combination of a cobalt salt and a tertiary amine.

Preferred polyphenylene oxides include poly (2,6-dimethyl-1,4-phenylene oxide), poly(2-methyl-1,4-phenylene oxide), poly(3-methyl-1,4 phenyleneoxide), poly(2,6-diethyl 1,4-phenylene oxide), poly(2-6-dipropyl-1,4-phenylene oxide), poly(2-methyl-6-allyl-1,4-phenylene oxide), poly(2,6-dichloromethyl-1,4-phenylene oxide), poly(2,3,6-trimethyl-1,4-phenylene oxide), poly(2,3,5,6-tetramethyl-1,4-phenylene oxide), poly(2,6-dichloro-1,4-phenylene oxide), poly(2,6-diphenyl-1,4-phenylene oxide), and poly(2,5-dimethyl-1,4-phenylene oxide).

Copolymers of the phenol compounds also may be used. The more preferred polyphenol polyphenylene is poly(2,6-dimethyl-1,4-phenylene) oxide. Useful polyphenyl oxides of the above-referenced application have a number average molecular weight of from 10,000 to 75,000. The intrinsic viscosity (IV) as measured in a chloroform solution is 0.3 to 0.85 and preferably 0.4 to 0.6.

The composition of the present invention includes an amine-terminated polyamide. The amine-terminated polyamide has an ASTM D-638 tensile modulus greater than 20,000 psi (134 MPa), typically greater than 25,000 psi (172 MPa), and preferably greater than 40,000 psi (276 MPa). More preferred are polyepsiloncaprolactam, polyhexamethylene adipamide, polytetramethylene adipamide and aromatic polyamides,

Polyamides suitable for use herein include the long chain polymeric amides having recurring amide groups as part of the polymer backbone and preferably having a number average molecule weight, as measured by end group titration of 15,000 to 40,000. The polyamides suitable for use herein can be produced by any conventional process known in the art.

Non-limiting examples of such polyamides are:
(a) those prepared by the polymerization of lactams, preferably epsilon-caprolactam (nylon 6); (b) those prepared by the condensation of a diamine with a dibasic acid, preferably the condensation of hexamethylene diamine with adipic acid (nylon 6,6) and the condensation of hexamethylene diamine with sebacic acid (nylon 6,10), the condensation of tetramethylenediamine with adipic acid (nylon 4,6), and the condensation of metaxylylene diamine with adipic acid and/or terephthalic/isophthalic acid and/or epsilon caprolactam; and those prepared by self-condensation of amino acids, preferably self-condensation of 11-amino-undecanoic acid (nylon 11) or 12-aminododecanoic acid (nylon 12); or random, block, or graft interpolymers consisting of two or more of these polyamides. Preferred are those obtained by the polymerization of epsilon-caprolactam.

Polyamides such as nylon-6 or nylon 6,6 can contain a variety of terminal functionality, including: (a) a carboxyl group attached to both ends of the polyamide chain; (b) a carboxyl group attached to one end and an amide group attached to the other end of the polyamide chain (the "capped" end) (only polylactams); (c) an amino group attached to both ends of the polyamide chain; (d) a carboxyl group attached to one end and an amine group attached to the other end of the polyamide chain (only polylactams); and mixtures thereof. Amine terminated polyamides are essential to this invention.

For the purposes of the present invention, amine terminated polyamide is considered to be a polyamide comprising molecules having amino end groups as at least two end groups of the polyamide molecule. Polyamides having "excess" amine termination are polyamides having molecules with more than 50 mole percent and preferably 60 to 97 mole percent of its end groups as amino end groups. Amine end group termination is typically produced by including an excess of diamines during polymerization. A preferred diamine is hexamethylene diamine.

Other examples of diamines suitable for use herein include tetramethylene diamine, pentamethylene diamine, octamethylene diamine, decamethylene diamine, and dodecylamine. The amount of diamine needed to produce the excess amino terminated polyamides or the present invention varies depending on the amount of amine desired and the molecule weight or the resulting polymer and can be easily determined by one skilled in the art. For example, about 0.25 mole percent of hexamethylene diamine is required to produce a polyepsiloncaprolactam of about 21,000 number average molecular weight having about 80 equivalents/10⁶g amino end groups and about 17 equivalents/10⁶g acid end groups.

Useful diacids include but are not limited to oxalic acid, malonic acid, succinic acid, glutaric acid, adipic acid, pimelic acid, suberic acid, azelic acid, and sebacic acid as noted.

Functionalized ethylene/C₃₋C₈ α-olefin rubbers are added to the reaction product to improve the overall impact resistance. Addition of such rubbers to the reaction product serves to improve properties obtained when the reaction products are then melt blended with the polyamides. It has been found that the notched Izod of the final blends can be substantially improved while retaining a high elongation to break. While the present inventors do not wish to be bound by any theory, it is postulated that the inclusion of the functionalized rubbers may actually toughen the reaction product/polyamide interface.

The rubber component (c) is defined as having an ASTM D-638 tensile modulus of less than 40,000 psi (276 MPa), typically less than 25,000 psi (172 MPa), and preferably less than 20,000 psi (138 MPa).

The preferred rubber of the present invention includes a graft copolymer which is a copolymer of ethylene and a C₃-C₈ α-olefin functionalized by a graft moiety grafted to the ethylene copolymer. Useful graft moieties include carboxyl and carboxylate functionalities. The ethylene and α-olefin is a copolymer of ethylene and an α-olefin selected from at least one C₃-C₈, and preferably, C₃-C₆ α-olefin. Propylene is the preferred monomer selected as the C₃-C₆ α-olefin in the copolymer. Other C₃-C₆ α-olefins, such as 1-butene, 1-pentene, and 1-hexene can be used in place of or in addition to propylene in the copolymers.

The carboxyl or carboxylate functionality, can be supplied by reacting the ethylene/C₃-C₆ α-olefin copolymer with an unsaturated graft moiety taken from the class consisting of α,β-ethylenically unsaturated dicarboxylic acids having from 4 to 8 carbon atoms, or derivatives thereof. Such derivatives include anhydrides of the dicarboxylic acids, or the metal salts of the acids, or the monoester of the dicarboxylic acid having from 0 to 100 percent of the carboxylic acid groups ionized by neutralization with metal basic salt, and the like. Illustrative of such acids and derivatives are maleic acid, maleic anhydride, maleic acid monoethyl ester, metal salts of maleic acid monoethyl ester, fumaric acid, fumaric acid monoethyl ester, itaconic acid, vinyl benzoic acid, vinyl phthalic acid, metal salts of fumaric acid monoethyl ester, monoesters of maleic or fumaric acid or itaconic acids where the alcohol is methyl, propyl, isopropyl, butyl, isobutyl, hexyl, cyclohexyl, octyl, 2-ethyl hexyl, decyl, stearyl, methoxy ethyl, ethoxy ethyl, hydroxy or ethyl, and the like. The graft moiety can be grafted to the ethylene copolymer by any well-known grafting process.

A useful graft copolymer of ethylene and an α-olefin contains from 30 to 60, and preferably, 40 to 45 weight percent of the α-olefin based on the ethylene. The copolymer also contains from 0.1 to 9 percent, preferably 0.1 to 4 percent, and more preferably 0.3 to 2.0 percent by weight of the graft moiety. The graft copolymer has a number average molecular weight of from 2,000 to 100,000; preferably 2,000 to 65,000; more preferably 5,000 to 35,000; and most preferably 5,000 to 20,000. Typical values of reduced solution viscosity (RSV) are from 0.5 to 3.5. A RSV of 2.8 corresponds to a number average molecular weight of 80,000 and a RSV of 10 corresponds to a number average molecular weight of about 12,000. A particularly useful rubber is maleated ethylene propylene rubber which contains 45% by weight ethylene and 54.6% by weight propylene, has a Mooney viscosity of 25, and is modified with 0.4% maleic anhydride.

Surprisingly, it has been found that compositions of functionalized polyphenylene oxide, amine-terminated polyamide, and functionalized ethylene α-olefin rubber have improved notched Izods.

Preferred compositions of the present invention contain from 5 to 50 percent or the graft rubbery copolymer, preferably 10 to 40 percent, and more preferably 15 to 30 percent of the graft rubbery copolymer.

The blends of this invention may also contain one or more conventional additives such as stabilizers and inhibitors of oxidative, thermal, and ultraviolet light degradation, lubricants and mold release agents, colorants, including dyes and pigments,
flame-retardants, fibrous and particulate fillers and reinforcements, plasticizers, and the like. These additives are commonly added during the mixing step.

Representative oxidative and thermal stabilizers which may be present in blends of the present invention include Group I metal halides, e.g., sodium, potassium, lithium with cuprous halides, e.g., chloride, bromide, iodide; hindered phenols, hydroquinones, and varieties of substituted members of those groups and combinations thereof.

Representative ultraviolet light stabilizers, include various substituted resorcinols, salicylates, benzotriazoles, benzophenones, and the like.

Representative lubricants and mold release agents include stearic acid, stearyl alcohol, and stearamides. Representative organic dyes include nigrosine, while representative pigments, include titanium dioxide, cadmium sulfide, cadmium selenide, phthalocyanines, ultramarine blue, carbon black, and the like. Representative fillers include carbon fibers, glass fibers, amorphous silica, asbestos, calcium silicate, aluminum silicate, magnesium carbonate, kaolin, chalk, powdered quartz, mica, feldspar, and the like.

Representative flame-retardants include organic halogenated compounds such as decabromodiphenyl ether and the like.

Representative plasticizers include lactams such as caprolactam and lauryl lactam, sulfonamides such as o,p-toluenesulfonamide and N-ethyl, o,p-toluenesulfonamide and other plasticizers known in the art.

The reaction product is preferably formed using polyphenylene oxide and the substituted olefin as recited above in the presence of a free radical catalyst. Useful free radical catalysts include peroxides such as dialkyl, diaryl, and diacyl peroxides, such as dicumyl peroxide and the like. Other useful free radical catalysts include N-bromoimides such as N-bromosuccinimide, dialkylazos and the like.

If a free radical catalyst is not employed, the reaction product is prepared by melt-blending polyphenylene oxide with the substituted olefin using conditions which are severe enough for a satisfactory reaction to occur. The reactive product need not be the complete reaction or the polyphenylene oxide and the substituted olefin. It is necessary only that a sufficient amount of reaction occur between the polyphenylene oxide and the substituted olefin so that the reactive groups of the reacted substituted olefin and polyphenylene oxide can react with the thermoplastic polymer to form the necessary graft typed linkages referred to above.

The reaction product itself is useful in that it can be independently kept for later blending with other materials or itself used as a molding compound.

The composition of the present invention is useful in making injection molded, high impact resistance plastic articles such as electrical connectors, automotive parts such as exterior panels, as well as composites including laminates.

The compositions of the present invention can be prepared by conventional polymer melt blending techniques. This process is typically conducted at a temperature above the melting temperature of the polymeric additives in a closed mixing device such as an extruder. The compositions can be molded in a mold cycle time of less than 8 seconds, and preferably, less than 3 seconds.

The present invention is more fully illustrated by the following non-limiting Examples.

### EXAMPLES

Several examples are set forth below to illustrate the nature of the invention and the manner of carrying it out. All parts are percents by weight unless otherwise indicated.

Melt blended compositions in the following Examples were tested according to the following procedures unless indicated otherwise: ASTM D-256 Notched Izod at 23°C, 3/16 inch (5 mm) thick sample; ASTM D-790 Flexural Strength and Modulus; ASTM D-638 Tensile Strength, Modulus and Elongation; ASTM D-648 Heat Deflection Temperature (HDT) at the indicated load pounds per square inch (psi) and MegaPascals (MPa)

Polymer blends were extruded on a Wayne or Killion one inch (2.54 cm) single screw or a Leistrutz 28mm co-rotating extruder using the conditions listed in the examples.

All test bars were injection molded on an Arburg All Rounder model number 221E/150 with a 35 ton clamp force. Bars (flex bars) for testing flexural properties were 3/16 inches (5 mm) thick, tensile bars were 1/8 inch (3 mm) thick. Izod testing was conducting on the flex bars. Typical molding conditions follow: Zone temperatures 1 to 3 280°, 290°, 300°C; mold temperature 93°C; with 900 psi (6 MPa) and 550 psi (4 MPa) pressures and cycle times of 17, 27, and 5 seconds.

Polymer extractables were performed after grinding the sample through a #20 mesh (0.85 mm) screen on a Wiley Mill. The dry, preweighed samples were then extracted overnight using a Soxhlet apparatus. To extract PPO, chloroform (CHCl₃) was used and for the polyamide, 2,2,2-trifluoroethanol (TFE). The samples were again dried and weighed to obtain weight loss and the percent weight loss calculated. CHCl₃ will extract ungrafted PPO and TFE will extract ungrafted nylon 6.

PPO carboxy titrations were performed upon a solution of PPO in a 1:1 mixture of chloroform/benzyl alcohol using a solution of NaOH in benzyl alcohol as the titrant.

Examples 1 and 2 are directed to the preparation of the reaction products of polyphenylene oxide and substituted olefin grafting agents.

### Example 1

This is an example of making a reaction product of polyphenylene oxide and maleic anhydride.

Dry poly(1,4-dimethylphenylene) oxide (PPO) (intrinsic viscosity 0.64) was intimately blended with maleic anhydride (MA) and N-Bromosuccinimide (NBS), a free radical catalyst, at a ratio of 98.9:1.0:0.1, respectively. This dry blend was extruded on a one inch (2.54 cm) single screw extruder having a L/D ratio of 24 using a 3:1 compression screw under the following conditions: temperature profile; 260, 280, 300, 300°C (Zones 1, 2, 3, and die, respectively) at 60 rpm. After dry pelletizing, the extrudate was ground in a Wiley Mill (using a 20 mesh (0.85 mm) screen) and extracted with acetone in a Soxhlet apparatus overnight. A carboxyl titration of the reaction product shows a 0.6 - 0.7% by weight of bound maleic anhydride. The intrinsic viscosity was 0.65. The maleic anhydride is believed to be grafted (g) to the PPO.

### Example 2

The following is typical of a procedure which has been used for reacting PPO with substituted olefins followed by a Table of substituted olefins which have been used.

An intimate blend of PPO of the type used in Example 1, substituted olefin, and free radical catalyst (dicumylperoxide, Luperox 500R(registered trademark))in a ratio of 98.9:1:0.1 respectively was extruded on a one inch (2.54 cm) extruder under the following conditions: Temperature profile; 260, 280, 290, 300°C; 12.5:1 compression mixing screw at 60 rpm followed by dry pelletizing. The pellets were ground in a Wiley Mill using a 20 mesh (0.85 mm) screen and extracted overnight with acetone in a Soxhlet apparatus, dried, and analyzed for bound substituted olefin. The Table below gives percent reaction after such a process. This is determined by the weight of bound reactive moiety divided by the initial weight of reactive moiety.

| Substituted Olefin | Percent Reaction | Method of Analysis |
|---|---|---|
| Maleic Anhydride | 76 | A |
| Fumaric Acid | 75 | A |
| Morpholinylmaleamic Acid | 85 | A |
| Cinnamic Acid | 28 | A |
| 2-Isopropenyl oxazoline | 43 | B |
| 2-Styryl oxazoline | 17 | B |
| Bis (2-hydroxyethyl)fumaramide | 89 | B* |
| A - carboxyl titration B - elemental analysis B* - elemental analysis - material was very insoluble | | |

Examples 3 to 11 are directed to compositions of functionalized PPO; polyamide; and rubber.

### Example 3

This is an example of making a blend of PPO, maleic anhydride, NBS, and rubber, and then adding polyamide to the blend.

A physical blend of 88.9% PPO, 1% maleic anhydride, 0.1% N-bromosuccinimide (NBS), and 10% maleated ethylene propylene rubber (mEPR) (sold by Exxon as MDV-746 - registered trademark, 45% by weight ethylene, 54.6% by weight propylene, 25 Mooney viscosity and modified with 0.4% maleic anhydride) was extruded in a one inch (2.54 cm) single screw extruder at 274°C. After cooling and pelletizing, the extrudate was blended with amine terminated nylon 6 (Allied-Signal Inc.), 0.03 milliequivalents per gram (meq/g) of amine end groups, NH₃ titration and 58 formic acid viscosity (FAV)) in a 60:40 weight ratio respectively and re-extruded at 274°C. This blend was dried and molded into test bars. Extraction was done with CHCl₃ and TFE. Physical properties measurements are summarized below:

| | |
|---|---|
| Notched Izod (RT) (ft.lbs/in notch) (J/M) | 6.2 (334) |
| Flex Modulus (psi) (MPa) | 279,000 (1,923) |
| Flex Strength (psi) (MPa) | 9,800 (68) |
| Flex Modulus (psi) (MPa) | 311,000 (2,144) |
| Tensile Strength (psi) (MPa) | 8,700 (60) |
| Elongation to break (%) | 100 |
| HDT 66 psi (0.5 MPa), (°C) | 191 |
| Unextracted residue | 30% |

### Example 4

This is an example of making a blend of functionalized PPO, NBS, and rubber, and then adding polyamide to the blend.

Dry PPO was physically blended with 1.0% maleic anhydride (MA) and 0.1% N-bromosuccinimide (NBS) used as a free radical catalyst, until intimate mixing was achieved. This blend was extruded using a vented one inch (2.54 cm) single screw extruder having an L/D ratio of 24, with a 3:1 compression ratio screw at 288°C followed by dry pelletizing. A titration of the polymer indicated 0.5-0.7 weight percent of maleic anhydride reacted with the PPO.

A physical blend of 10% mEPR rubber as used in Example 3 and the above PPO/MA was extruded on a one inch (2.54 cm), 24 L/D single screw extruder using mixing screw having a compression ratio of 12.5:1 at 288°C, cooled and pelletized.

An extruder melt blend was made using the preblend of PPO/MA and mEPR and amine terminated nylon 6 of the type used in Example 3 (54:6:40 weight ratio, respectively) under the same conditions as the preblend, cooled and pelletized. The polymer alloy was dried in a vacuum oven for 10 to 15 hours at 130°C and molded into test bars. The blend composition and properties are summarized below:

| | |
|---|---|
| Notched Izod (Room Temp.) (ft.lb./in notch of 1/8" (3mm)bar) (J/M) | 6.9 (373) |
| Flex Modulus (psi) (MPa) | 305,000 (2,103) |
| Flex Strength (psi) (MPa) | 10,800 (74) |
| Tensile Modulus (psi) (MPa) | 321,000 (2,213) |
| Tensile Strength (psi) (MPa) | 9,200 (63) |
| Elongation to break (%) | 73 |
| HDT, 264 psi (2 MPa) (°C) | 142 |
| CHCl₃ sol (%) (PPO soluble) | 36 |
| TFE sol (%) (Nylon soluble) | 32 |
| Unextracted residue (%) | 32 |

### Example 5

This is an example of making a blend of PPO, fumaric acid, NBS, and rubber, and then adding polyamide to the blend.

Compounding of PP)/nylon 6 alloys was done on either a single or twin screw extruder in one step using multiple feed ports. At the feed throat, a previously prepared blend of 49.45% PPO, 10% mEPR, 0.5% fumaric acid, and 0.05% NBS was fed at 60% of the total melt stream by a loss in weight feeder. At the downstream feed part, nylon 6 of the type used in Example 3 was fed at 40% of the melt stream with a second loss in weight feeder. Further downstream, a vacuum vent was applied to remove trapped air, volatiles, and water. Typical operating parameters on a 30 mm Leistritz twin screw extruder were barrel temp. 220°C to 250°C, 175 RPM, 15-19 amps, head pressure of 1400 psi (9.65 MPa), and melt temp. of 300 to 340°C. Physical properties of the compound follow:

| | |
|---|---|
| Notched Izod, ft lb/in (J/M) | 9 (486) |
| Flex Strength, psi (MPa) | 11,000 (76) |
| Flex Modulus, psi (MPa) | 270,000 (1,861) |
| Tensile Strength, psi (MPa) | 8,000 (55) |
| Ultimate Elongation, % | 50% |

A compound was produced using dicumyl peroxide as a free radical initiator (direct replacement for NBS) in a similar manner. Physical properties of the compound follow:

| | |
|---|---|
| Notched Izod, ft lb/in (J/M) | 9 (486) |
| Flex Strength, psi (MPa) | 11,000 (76) |
| Flex Modulus, psi (MPa) | 280,000 (1,930) |
| Tensile Strength, psi (MPa) | 8,000 (55) |
| Ultimate Elongation, % | 50% |

### Example 6

The effect of rubber levels was studied in functionalized PPO/polyamide blends. All extrusions were done under identical conditions. The PPO/MA and mEPR rubber are the same as used in Example 3. Physical blends were extruded using a 1" (2.54 cm) single screw extruder with the following temperature profile (Zone 1-3, die); 225°C, 260°C, 275°C, and 280°C at a screw speed of 60 rpm. The above extrudate was dried and blended with amine terminated nylon 6 of the type used in Example 3 and re-extruded (Zones 1-3, die) (225°C, 290°C, 290°C, 290°C), cooled, and pelletized. After drying and injection molding into standard test bars, physical properties were tested. Results are summarized below:

| | | | |
|---|---|---|---|
| mEPR weight % | 3 | 6 | 10 |
| PPO/MA weight % | 57 | 54 | 50 |
| Nylon 6 weight % | 40 | 40 | 40 |
| Notched Izod (RT) (ft.lb/in notch) (J/M) | 1.8 (97) | 10.0 (540) | 13.2 (713) |
| Flex Mod (psi) (MPa) | 425,000 (2,930) | 345,000 (2,378) | 350,000 (2,413) |
| Tensile Mod. (psi) (J/M) | 336,000 | 366,000 | 326,000 |
| | (2,316) | (2,523) | (2,247) |
| HDT at 66 psi (0.5 MPa) (°C) | 193 | 191 | 190 |

The results indicate that generally the impact properties depend upon the amount of mEPR used.

### Example 7

The effectiveness of the one-step melt blending was compared to the two step melt blending of the present invention. The compositions were blended using a 28 mm corotating twin-screw extruder. The extruder had 10 zones operating at 200, 270, 290, 290, 290, 290, 300, 300, 300 and 300°C respectively. The extruder RPM was 150; motor amperage was 13-15A; die pressure was 900-1400 psi (6-10 MPa); and L/D was 40. In the one-step process, all of the components of the composition were fed into the mouth of the extruder together. In the two-step process, all of the ingredients were fed into the mouth of the extruder together except for the amine terminated nylon 6 of the type used in Example 3 which was fed into Zone 5. After injection molding into test bars and drying, physical properties were measured. Results are summarized below:

| | One-Step | Two-Step |
|---|---|---|
| PPO/MA % | 53 | 53 |
| MA weight % | 1 | 1 |
| mEPR weight % | 6 | 6 |
| Nylon 6 weight % | 40 | 40 |
| Notched Izod (RT) (ft.lb/in notch) (J/M) | 3.2 (173) | 6.2 (335) |
| Notched Izod (-29°C) (ft.lb/in notch) (J/M) | 1.6 (86) | 2.2 (119) |
| Flex Modulus (psi) (MPa) | 271,000 (1,868) | 283,000 (1,951) |
| Flex Strength (psi) (MPa) | 9,300 (64) | 9,900 (68) |
| Tensile Modulus (psi) (MPa) | 303,000 (2,089) | 316,000 (2,179) |
| Elongation at Break (%) | 25 | 89 |
| HDT at 264 psi (2 MPa) (°C) | 128 | 150 |

The results indicate that the two-step process is more preferred than the one-step process if higher impact properties are desired.

### Examples 8 (comparison) and 9

The effect of amine terminated nylon was studied. A balanced nylon 6 having equal amine and acid end group termination (Allied-Signal 0.02 meq amine/carboxyl per gram. 70 FAV) was used in Example 8. This was compared to Example 9 which is a composition including amine terminated nylon 6 of the type used in Example 3.

An intimate blend of powdered PPO (IV = 0.63) and fumaric acid at a 99:1 weight ratio, respectively, was extruded using a 1" (2.54 cm) extruder at 70 rpm with a 3:1 compression screw using the following temperature profiles: 260°, 280°, 300°, 300°C (Zone 1, 2, 3, die, respectively).

An intimate blend of 83 parts by weight of this PPO fumaric acid reaction product and 17 parts by weight of mEPR was extruded under the following conditions: temperatures 216°, 243°, 260°, 290°C, (Zone 1-3, die), at 40 rpm, on a 1" (2.54 cm) single screw extruder using a mixing screw. This was followed by palletizing and drying.

Sixty parts by weight of the above extrudate was re-extruded with 40 parts by weight of balanced nylon 6 or amine terminated nylon 6 (40 parts) under the same conditions above. The extrudate was dried and molded into test bars. The blends had the following properties:

| | Ex 8 (Comp.) Balanced N₆ | Ex 9 Amine term N₆ |
|---|---|---|
| RT Notched Izod (ft-lb/in) (J/M) | 10.6 (572) | 12.6 (680) |
| Flexural Modulus (psi) (MPa) | 280,000 (1,930) | 275,000 (1,896) |
| Flexural Strength (psi) (MPa) | 9,700 (67) | 9,600 (66) |
| Tensile Modulus (psi) (MPa) | 313,000 (2,158) | 308,000 (2,123) |
| Tensile Strength (psi) (MPa) | 8,400 (58) | 8,200 (57) |
| Elongation at break (%) | 22 | 104 |
| HDT at 264 psi (2 MPa) (°C) | 138 | 147 |

The results indicate that the use of amine terminated nylon 6 provides notched Izod and elongation than balanced nylon 6.

### Example 10

This is an example comparing a composition of the present invention to two commercially available products.

Product A is understood to be a blend of about by weight: 50% styrene-modified PPO; 40% amine-terminated nylon 6,6; and 10% styrene-butadiene-styrene copolymer. Product B is understood to be a blend of about by weight: 50% PPO; 40% amine-terminated nylon 6.6; and 10% styrene-butadiene-styrene copolymer. In Example 10 49.5% PPO, 0.5% fumaric acid, and 10% mEPR of the type used in Example 3 were extruded. 40% amine terminated nylon 6 of the type used in Example 3 was added.

The compositions were injection molded into standard one-eighth inch (3 mm) test bars by using a reciprocating screw mold apparatus which was operated at a temperature of 282 to 304°C and a pressure of 7 to 10 MPa. The mold cycle times were measured and follow:

| | Min. Mold Closed Time (sec) |
|---|---|
| EXAMPLE 10 | 3 |
| PRODUCT A | 16 |
| PRODUCT B | 8 |

For the composition of Example 10, the mold cycle time was limited by the screw retraction time which was close to 3 seconds; thus, the composition was injection molded in a very brief time. For Product A, the mold knockout pins penetrated the test bar at 15 seconds which resulted in an unacceptable bar due to deformation. For Product B, the mold knockout pins penetrated the test bar at 7 seconds which resulted in an unacceptable bar due to deformation.

The properties of the composition and Products A and B were measured according to the following: tensile strength and elongation - ASTM D638, flexural strength and modulus - ASTM D790, notched Izod - ASTM D256, drop weight impact - ASTM D329, and DTUL - ASTM D648. The results are indicated below:

| | Example 10 | PRODUCT A | PRODUCT B |
|---|---|---|---|
| Tensile Strength (psi) (MPa) | 8,200 (57) | 8,400 (58) | 8,600 (59) |
| Elongation (%) | 48 | 46 | 86 |
| Flexural Strength (psi) (MPa) | 11,800 (81) | 13,000 (90) | 12,300 (85) |
| Flexural Modulus (psi) (MPa) | 295,000 (2,034) | 350,000 (2,413) | 304,000 (2,096) |
| Notched Izod (ft lb/in) (J/M) | 9.5 (513) | 4.5 (243) | 4.7 (254) |
| Notched Izod @ -40 °C (ft lb/in) (J/M) | 4.8 (259) | 3.9 (211) | 3.0 (162) |
| Drop Weight Impact (ft lb) (J) | 64 (87) | 83 (113) | 89 (121) |
| DTUL @ 66 psi (0.5 MPa) °C | 168 | -- | 174 |
| DTUL @ 264 psi (2MPa) °C | 106 | -- | 146 |

The results indicate that the composition including maleated ethylene-propylene rubber has significantly improved impact resistance and shorter cycle times compared with compositions including styrene-butadiene-styrene rubber.

### Example 11

This is an example of blending polyamide with rubber, and then adding functionalized PPO to the blend.

A physical blend of amine terminated nylon 6 of the type used in Example 3 and mEPR rubber of the type used in Example 3. There was 87% by weight of nylon and 13 percent by weight of the mEPR. The blend was extruded on a 1" (2.54 cm) single (12.5:1 mixing) screw extruder having a 12.5:1 compression ratio mixing screw at 260°C. After cooling, pelletization and drying, the above extrudate was re-extruded with PPO/MA from Example 1 in a 40/60 ratio respectively at 274°C. This composition was cooled, pelletized, dried, and molded into test bars. The material had the following properties:

| | |
|---|---|
| Notched Izod, (RT) ft.lbs/in notch (J/M) | 3.1 (167) |
| Tensile, Elongation to Break (%) | 39 |
| Flexural Modulus (psi) (MPa) | 291,000 (2,006) |
| Tensile Strength (psi) (MPa) | 8,200 (57) |
| HDT at 264 psi (2 MPa) (°C) | 122 |

## Claims

1. A composition comprising (A), (B) and (C):
(A) at least 5% by weight, based on total composition, of a reaction product of
(1) 70 to 99.99 percent by weight of polyphenylene oxide; and
(2) 0.01 to 30 percent by weight of a substituted olefin having the formula: 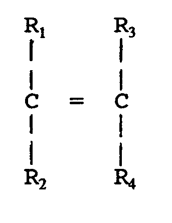 wherein one to two of R₁, R₂, R₃ and R₄ individually are selected from a reactive group consisting of a carboxylic acid, acid anhydride, acid amide, imido, carboxylic ester, amino group, hydroxyl group, epoxy group, oxazoline, oxazolone, oxazine, oxazinone, isocyanate, carbamate, carbamoyl lactam, acyl lactam, and mixtures and derivatives thereof, and wherein the remaining two to three of R₁, R₂, R₃ and R₄ individually are H or a hydrocarbon radical from 1 to 20 carbon atoms;
(B) at least 5% by weight, based on total composition of amine-terminated polyamide; and
(C) 5 to 50% by weight, based on total composition, of a functionalized rubber of ethylene and a C₃-C₈ α-olefin.

2. A composition according to Claim 1 characterised in that component (C) is a functionalized rubber of ethylene and propylene.

3. A composition according to Claim 1 or 2 characterised in that component (C) is maleated ethylene propylene rubber.

4. A composition according to any one of Claims 1 to 3 characterised in that said oxazoline and oxazine radicals have the formula: 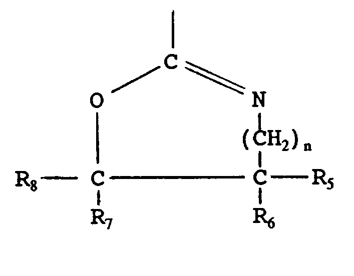 or said oxazolone and oxazinone radicals have the formula: 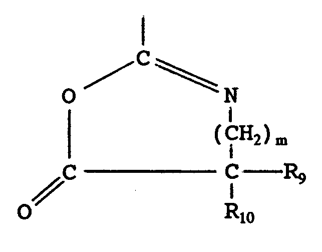 wherein R₅ to R₁₀ are selected from H, alkyl groups having from 1 to 20 carbons, and aryl groups having from 6 to 14 carbons, n is 0 or 1, and m is 0 or 1.

## Patentansprüche

1. Zusammensetzung, welche (A), (B) und (C) aufweist, und zwar:
(A) mindestens 5 Gewichts-% auf Basis der Gesamtzusammensetzung eines Reaktionsproduktes aus
(1) 70 bis 99,99 Gewichtsprozent Polyphenylenoxyd; und
(2) 0,01 bis 30 Gewichtsprozent eines substituierten Olefins mit der Formel: 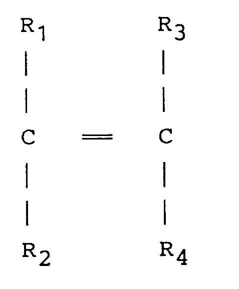 worin eine oder zwei von R₁, R₂, R₃ und R₄ jeweils aus einer reaktiven, aus einer Carbonsäure, einem Säureanhydrid, Säureamid, Imido, Carbonsäureester, einer Aminogruppe, Hydroxylgruppe, Epoxygruppe, Oxazolin, Oxazolon, Oxazin, Oxazinon, Isocyanat, Carbamat, Carbamoyllactam, Acyllactam sowie Mischungen und Derivaten davon bestehenden Gruppe ausgewählt sind, und worin die verbleibenden zwei oder drei von R₁, R₂, R₃ und R₄ jeweils H oder ein Kohlenwasserstoffradikal mit 1 bis 20 Kohlenstoffatomen sind;
(B) mindestens 5 Gewichts-% auf Basis der Gesamtzusammensetzung an mit Amin endendem Polyamid; und
(C) 5 bis 50 Gewichts-% auf Basis der Gesamtzusammensetzung eines funktionalisierten Gummis von Äthylen und einem α-Olefin mit C₃-C₈.

2. Zusammensetzung nach Anspruch 1, dadurch gekennzeichnet, daß die Komponente (C) ein funktionalisierter Gummi von Äthylen und Propylen ist.

3. Zusammensetzung nach Anspruch 1 oder 2, dadurch gekennzeichnet, daß die Komponente (C) ein maleierter Äthylen-Propylen-Gummi ist.

4. Zusammensetzung nach einem der Ansprüche 1 bis 3, dadurch gekennzeichnet, daß die Oxazolin- und Oxazin-Radikalen die Formel haben: 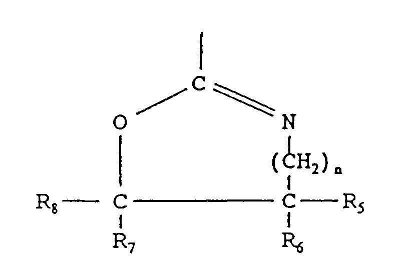 oder die Oxazolon- und Oxazinon-Radikalen die Formel haben: 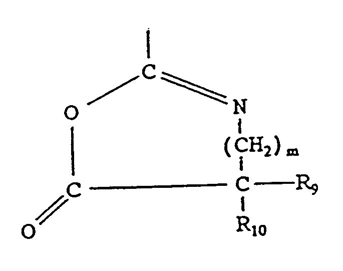 worin R₅ bis R₁₀ von H, Alkylgruppen mit 1 bis 20 Kohlenstoffen und Arylgruppen mit 6 bis 14 Kohlenstoffen ausgewählt sind, n gleich 0 oder 1 ist und m gleich 0 oder 1 ist.

## Revendications

1. Composition comprenant (A), (B) et (C) :
(A) au moins 5 % en poids, par rapport à la composition totale, d'un produit de la réaction de :
(1) 70 à 99,99 % en poids d'un oxyde de polyphénylène; et
(2) 0,01 à 30 % en poids d'une oléfine substituée ayant la formule : 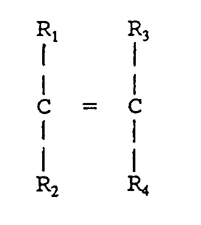 dans laquelle un à deux des R₁, R₂, R₃ et R₄ sont individuellement choisis dans un groupe réactif constitué d'un acide carboxylique, d'un anhydride d'acide, d'un amide d'acide, d'un imido, d'un ester carboxylique, d'un groupe amino, d'un groupe hydroxyle, d'un groupe époxy, d'une oxazoline, d'un oxazolone, d'une oxazine, d'un oxazinone, d'un isocyanate, d'un carbamate, d'un lactame de carbamoyle, d'un lactame d'acyle, et de leurs mélanges et des dérivés, et dans lequel les deux à trois R₁, R₂, R₃ et R₄ restants sont individuellement H ou un radical hydrocarboné ayant 1 à 20 atomes de carbone;
(B) au moins 5 % en poids, par rapport à la composition totale d'un polyamide à terminaison amine; et
(C) 5 à 50 % en poids, par rapport à la composition totale, d'un caoutchouc fonctionnalisé d'éthylène et d'une α-oléfine en C₃-C₈.

2. Composition selon la revendication 1, caractérisé en ce que le constituant (C) est un caoutchouc fonctionnalisé d'éthylène et de propylène.

3. Composition selon la revendication 1 ou 2, caractérisé en ce que le constituant (C) est un caoutchouc d'éthylène et de propylène maléaté.

4. Composition selon l'une quelconque des revendications 1 à 3, caractérisée en ce que lesdits radicaux oxazoline et oxazine ont la formule : 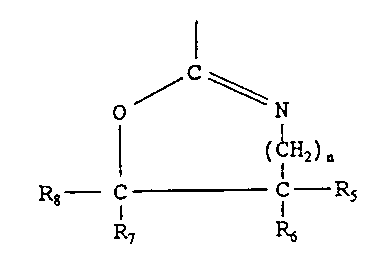 ou lesdits radicaux oxazolone et oxazinone ont la formule : 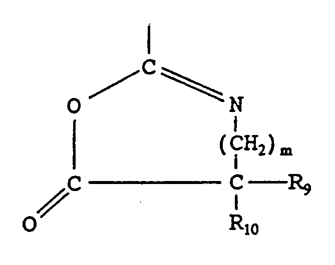 dans laquelle R₅ à R₁₀ sont choisis parmi H, des groupes alkyle ayant de 1 à 20 atomes de carbone, et des groupes aryle ayant de 6 à 14 atomes de carbone, n est 0 ou 1, et m est 0 ou 1.
